# FASCICULE DE BREVET EUROPEEN

(11) **EP 0 637 536 B1**
(45) Date de publication et mention de la délivrance du brevet: **07.04.1999**
(21) Numéro de dépôt: 94420226.6
(22) Date de dépôt: 04.08.1994
(51) Int. Cl.: B62D 1/22

(54) **Groupe de transmission et de commande à double entrée et application à la direction double poste d'un engin mobile**
Getriebe- und Steuereinheit mit zwei Eingängen und ihre Anwendung in einem fahrbaren Arbeitsgerät mit zwei Lenkstellen
Transmission and control unit with dual input and its application in a working vehicle with two steering locations

(30) Priorité: 06.08.1993 FR 9309883
(43) Date de publication de la demande: 08.02.1995
(73) Titulaire: PPM SOCIETE ANONYME:, 71304 Montceau-les-Mines Cédex (FR)
(72) Inventeur: Bernigaud, Jean Paul, F-71230 Saint Vallier (FR)
(74) Mandataire: Ropital-Bonvarlet, Claude

(56) Documents cités:
- EP-A- 0 041 421

## Description

La présente invention est relative au domaine de la commande sélective d'un organe mobile à partir de l'un ou l'autre de deux postes de commande délocalisés et qui sont destinés à être utilisés dans des conditions fonctionnelles spécifiques.

Elle concerne plus spécifiquement une direction double poste d'un engin mobile destiné à évoluer sur des sites divers et à des vitesses variables en possédant une bonne maîtrise directionnelle.

Des engins du type ci-dessus, tel que défini dans le préambule de la revendication 1 et connu par ex. de EP-A-0 041 421, possèdent deux cabines de conduite qui sont réservées, par exemple, l'une au déplacement de l'engin mobile et l'autre au travail qu'un tel engin peut effectuer.

Dans le domaine ci-dessus, l'invention trouve une application particulièrement intéressante à la commande de direction d'une grue automotrice possédant un poste de conduite pour contrôler l'évolution sur route de l'engin et un poste de conduite délocalisé réservé au contrôle des fonctions de levage mais aussi de celles de commande de la direction sur site et en cours de travail.

La technique antérieure a certainement proposé des solutions pour régler le problème qui se pose lorsqu'il convient de pouvoir commander un organe mobile depuis deux postes d'intervention. Ces moyens à caractère purement mécanique, dans un premier temps, ne permettent pas de répondre au problème lorsque les deux postes de conduite sont éloignés bien qu'étant adaptés sur une même plate-forme porteuse. En effet, dans un tel cas les liaisons mécaniques deviennent complexes, voire impossibles à implanter, surtout lorsque pour des raisons d'efficacité, l'un des postes de conduite est porté par une structure mobile par rapport à la plate-forme porteuse.

Pour une telle application, la technique antérieure a aussi proposé de relier chaque poste de conduite aux organes directeurs par une installation hydraulique propre. Pour satisfaire aux exigences de circulation routière, l'installation réservée à cette fin est complétée par une installation mécanique de manière que dans les cas éventuels de défaillance de l'installation hydraulique, une commande de sécurité positive puisse être conservée.

Une proposition du type ci-dessus, connue notamment par la demande **EP A 0 041 421**, fait intervenir obligatoirement deux installations indépendantes incorporant en double les mêmes composants nécessaires à la constitution de deux circuits dits de puissance, c'est-à-dire à même de produire une énergie hydraulique à fort débit et à pression élevée et dont certains composants tels que les pompes sont double par mesure de sécurité. Ces deux installations sont commandées sélectivement à partir de deux organes de commande implantés dans les deux cabines de conduite.

Ainsi, à titre d'exemple, pour une grue mobile d'une masse de 26 tonnes capable d'élever une charge maximale de 30 tonnes, il est habituel de mettre en service deux installations incorporant, outre les composants habituels fonctionnels, deux pompes de capacité 25 l/ min à 150 bars.

Il est clair que deux installations de cet ordre sont chères et consommatrices d'énergie et posent un problème de fiabilité dans le temps à moins d'assurer un entretien rigoureux.

Par ailleurs, dans certaines configurations tenant à la commande d'un même train directeur, les deux installations possèdent alors un tronc commun qui doit pouvoir être isolé de l'une ou de l'autre par des vannes par exemple du type électrodistributeur ou analogue.

On conçoit qu'une telle configuration recèle en elle-même un danger car le dysfonctionnement de l'une ou l'autre des vannes perturbe alors le fonctionnement correct de l'installation en service.

L'objet de l'invention est de remédier aux inconvénients ci-dessus et de proposer une nouvelle direction double poste, du type de celle enseignée par la demande **EP-A-0 041 421**, mais qui soit conçue pour offrir, à partir d'un seul circuit de puissance, une possibilité de commande sélective des organes directeurs que cette commande provienne du poste principal ou du poste secondaire.

Un autre objet de l'invention est de proposer une direction double poste incluant un groupe de transmission et de commande à double entrée qui soit simple, robuste, fiable et relativement peu onéreux et qui permette, de surcroît, une implantation relativement aisée sur la plate-forme d'un engin mobile, dans le cas particulier d'application spécifique retenue de façon non limitative.

Un autre objet de l'invention est de proposer une direction double poste d'un engin mobile comprenant une plate-forme sur laquelle est adaptée une structure de travail mobile et/ou articulée dont les organes moteurs sont alimentés à partir d'un circuit hydraulique de puissance travail, ledit engin comprenant un poste de conduite dit principal et un poste de conduite dit secondaire implanté sur la plate-forme, lesdits postes comprenant des volants aptes à agir sélectivement pour commander des organes directeurs de l'engin.

Pour atteindre les objectifs ci-dessus, la direction double poste d'un engin mobile est caractérisée en ce que :
- la première portion et la seconde portion d'arbre sont liées entre elles pour former un arbre traversant,
- le moteur hydraulique est alimenté par le circuit de pilotage à partir du circuit de puissance,
- et un embrayage électromagnétique est interposé entre l'arbre de sortie du moteur hydraulique et l'embout d'entrée de l'arbre traversant et se trouve mis sous alimentation électrique à partir du poste de conduite secondaire.

Diverses autres caractéristiques ressortent de la description faite ci-dessous en référence aux dessins annexés qui montrent, à titre d'exemple non limitatif, une forme de réalisation de l'objet de l'invention.
La **fig. 1** est une vue schématique d'un engin mobile illustrant l'application préférée mais non limitative de l'invention.
La **fig. 2** est un schéma synoptique d'implantation des circuits de commande relevant de l'engin selon la **fig. 1**.
La **fig. 3** est une coupe-élévation montrant, à plus grande échelle, le groupe selon l'invention.

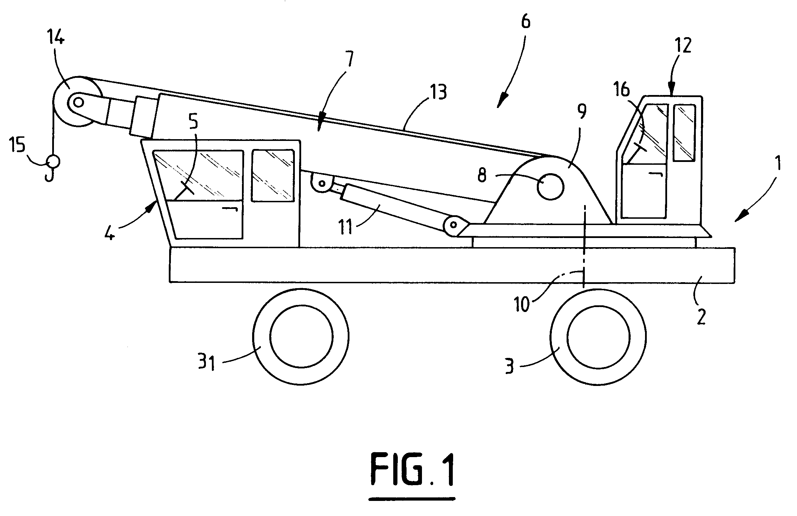

La **fig. 1** illustre, de façon schématique, l'application préférée de l'objet de l'invention à un engin mobile désigné par la référence générale **1** et qui comporte une plate-forme **2** portée sur des organes de roulement **3** organisés en trains, par exemple, au nombre de deux et dont l'un au moins tel que **3**_{**1**} est directeur. Les organes de roulement sont, de préférence, constitués par des roues qui peuvent être montées par essieu ou encore à caractère indépendant.

Bien que cela ne soit pas représenté, la plate-forme **2** supporte, de toute façon localement appropriée, les différents organes de suspension et de motorisation qui ne font pas partie directement de l'invention, de même que des moyens stabilisateurs non représentés.

La plate-forme **2** porte une cabine de conduite **4** constituant un poste d'intervention, dit principal par convention, pour contrôler le déplacement de la plate-forme **2** en circulation routière par exemple. Le poste **4** comporte un organe d'intervention **5**, tel qu'un volant, destiné à agir sur les organes directeurs **3**_{**1**}.

La plate-forme **2** de l'engin mobile **1**, du type représenté, porte une structure de travail **6** qui est, par exemple, constituée par une flèche de grue **7** de type téléscopique. La flèche **7** est montée sur un axe **8** porté par une tourelle **9** adaptée sur la plate-forme **2**, de manière à pouvoir être orientée sur un axe vertical **10**. La flèche **7** peut être réglée en azimut par l'intermédiaire d'un transformateur d'energie **11**, tel qu'un vérin hydraulique, qui peut être commandé à partir d'une cabine d'intervention **12**, dite par convention poste de conduite secondaire. La flèche télescopique **7** est pourvue, de manière conventionnelle, d'un vérin télescopique hydraulique permettant de commander en extension ou en rétraction les différents éléments telescopiques constitutifs de la flèche. Un tel vérin est également commandé à partir de la cabine **12**. La flèche **7** est associée, de façon également connue, à un câble **13** passant sur une poulie de tête **14** au-delà de laquelle il peut suspendre une charge par un moyen d'élingage **15**. Le câble **13** est commandé depuis la cabine **12** par la rotation d'un cabestan ou analogue ou encore d'un treuil non représenté.

La cabine **12** est également pourvue des moyens permettant de commander la rotation de la tourelle **9** sur l'axe **10**.

Outre les moyens ci-dessus, la cabine **12** comporte un moyen d'intervention **16**, tel qu'un volant, à partir duquel l'opérateur peut commander le train directeur **3**_{**1**} en cours de travail de la flèche **7**, lorsqu'il convient de déplacer l'engin mobile **1** pour assurer une orientation ou un déplacement relatif de la charge dans des conditions qui ne relèvent pas, soit de l'extension ou de la rétraction de la flèche, soit de la rotation propre de la tourelle **9**.

L'objet de l'invention est de proposer des moyens qui permettent, dans le cadre de l'application préférée mais non limitative retenue ci-dessus, d'assurer sélectivement la commande du train directeur **3**_{**1**}, soit à partir de la cabine principale **4**, soit à partir de la cabine secondaire **12**.

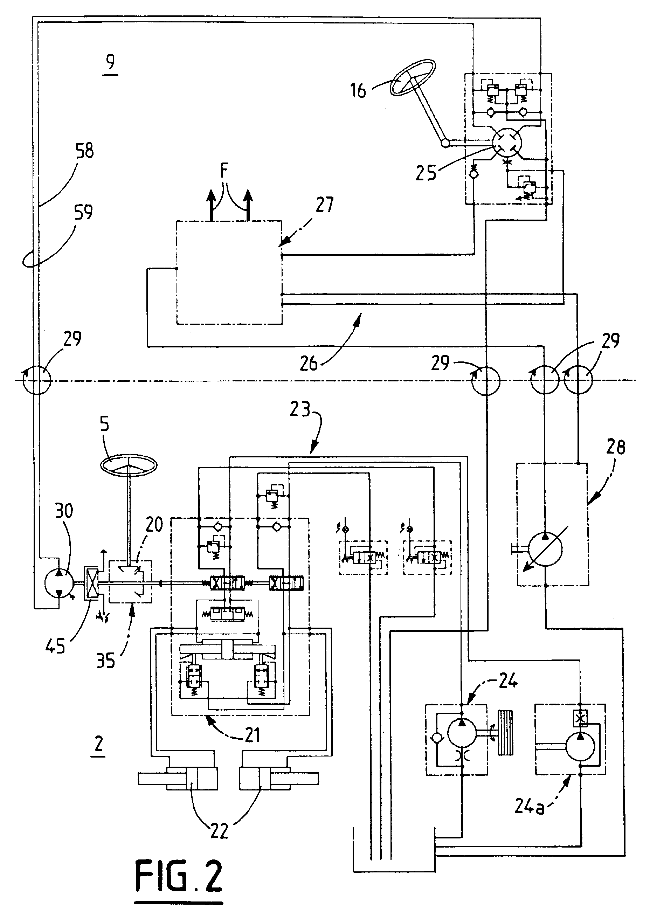

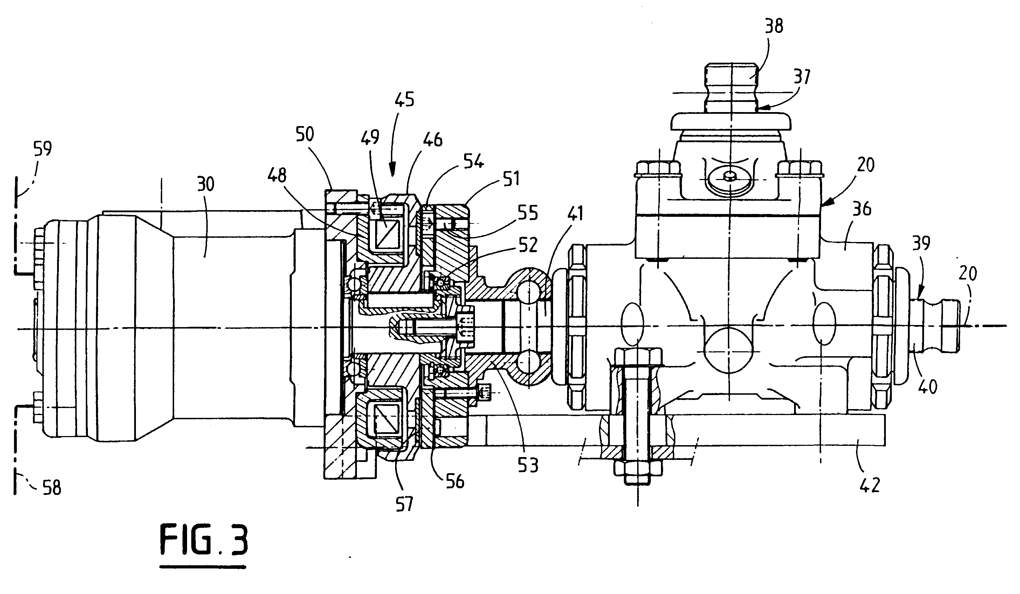

Les moyens de l'invention sont plus particulièrement illustrés par les **fig. 2** et **3** montrant que le volant **5** agit par une liaison mécanique **20** sur un boîtier de direction **21** comprenant une liaison directe avec les organes directeurs **3**_{**1**} et une installation de commande hydraulique, par exemple de deux vérins **22** du type à double effet, agissant sur les organes de roulement et de direction **3**_{**1**}. L'alimentation des vérins **22** est assurée par le boîtier **21** à partir d'un circuit dit de puissance **23** comprenant les moyens de contrôle et d'asservissement habituels ainsi que plusieurs sources **24**, **24a** capables de fournir chacune par exemple un débit de fluide hydraulique de 25 l/minute à une pression de 150 bar.

La **fig. 2** montre également que, selon l'invention, le volant **16** de la cabine **12**, commande positivement un distributeur tournant **25** raccordé à un circuit **26** dit de pilotage dérivé par un bloc **27** de contrôle et d'asservissement à partir d'un circuit de puissance **28** ayant pour fonction première l'alimentation des fonctions principales de levage schématisées par les flèches **F**. Un tel circuit peut par exemple fournir 200 l/ minute de fluide hydraulique à une pression de 350 bar. La liaison hydraulique entre le bloc **26** et le circuit **28** fait intervenir un joint tournant **29** définissant autant de passages que nécessaire.

Le bloc **27** fournit au circuit **26** dit dérivé un fluide hydraulique de pilotage par exemple de 5 litres par minute à une pression de 50 bar.

Selon l'invention, il est prévu que le volant **16** permette de commander et contrôler par le circuit **26** l'alimentation sélective d'un transformateur d'énergie hydraulique **30**, dit de pilotage à double sens de rotation, prévu pour agir également sur les organes de roulement et de direction **3**_{**1**}.

A cette fin, il est prévu de constituer une liaison de commande groupée apte à attaquer le boîtier de direction **21** sélectivement à partir d'une commande initiée depuis l'organe d'intervention **5** ou depuis l'organe d'intervention **16**.

La **fig. 3** montre un groupe de transmission et de commande **35** répondant à cet objectif, un tel groupe comprenant la liaison mécanique **20** et le moteur hydraulique **30** qui sont associés comme décrit ci-après. La liaison mécanique **20** est du type renvoi d'angle comprenant un boîtier ou carter **36** abritant et protégeant ledit renvoi d'angle et assurant le guidage, le centrage et la rotation d'un demi-arbre **37** comportant, extérieurement au boîtier, un embout d'entrée **38** qui est destiné à être lié au volant **5**. Le carter **36** supporte, par ailleurs, un arbre traversant **39** qui, de préférence, possède une direction orthogonale à celle du demi-arbre **37**. L'arbre traversant **39**, destiné à être lié en rotation avec le demi-arbre **37** par le renvoi d'angle, non représenté mais connu dans la technique, possède, extérieurement au carter **36**, deux embouts **40** et **41** qui peuvent être ou non identiques à l'embout **38**.

L'embout **40** est destiné à être lié en rotation avec l'organe à commander en mouvement, soit directement, soit par l'intermédiaire du boîtier **21**. L'embout **40** est dit, à cette fin, de sortie par opposition à l'embout **41** dit d'entrée et qui est réservé à la liaison avec le moteur hydraulique **30**.

Le carter **36** et le moteur **30** sont montés sur une platine d'adaptation **42** permettant d'assurer la fixation du groupe de transmission et de commande sur la plate-forme **2**.

La liaison entre le moteur hydraulique **30** et l'embout d'entrée **41** est assurée par l'intermédiaire d'un embrayage électromagnétique **45** comprenant un premier plateau dit menant **46** qui est lié en rotation avec l'arbre de sortie **47** du moteur hydraulique **30**. Le plateau menant **46** recouvre et protège une carcasse **48** et une bobine électromagnétique **49** qui sont montées, concentriquement au plateau **46**, sur l'embase **50** du moteur hydraulique **30**.

L'embrayage électromagnétique **45** comporte un second plateau **51** dit mené qui est centré, avec possibilité de rotation relative indépendante sur l'arbre **47**, par l'intermédiaire d'un roulement **52**. Le plateau mené **51** est solidaire d'un manchon d'accouplement **53** permettant une liaison avec l'embout **41**.

L'embrayage électromagnétique comprend, par ailleurs, un disque d'embrayage mobile **54** qui est monté sur le plateau mené **51**, de manière à être déplaçable axialement tout en restant lié angulairement avec ce dernier. Un tel montage peut être obtenu par l'interposition de doigts ou analogues **55** par exemple portés par le disque et montés à glissement doux dans des alésages du plateau mené **51**.

Le disque mobile est aussi lié au plateau mené **51** par un ressort à membrane **56** destiné à maintenir le disque d'embrayage **54** dans une position stable débrayée contre le disque mené **51** et à distance d'une garniture de friction **57** présentée par la face en vis-à-vis du plateau menant **46**.

Le moteur hydraulique **30** est raccordé au distributeur **25** par deux lignes **58** et **59** qui font intervenir la présence du joint tournant **29** pour tenir compte de la possible rotation de la tourelle **9** par rapport à la plate-forme **2**.

Dans la situation correspondant à un déplacement de l'engin mobile **1** sur route, l'embrayage électromagnétique **45** n'étant pas alimenté, la liaison angulaire entre le moteur hydraulique **30** et l'embout d'entrée **41** n'est pas établie.

Une action de commande sur le volant **5** provoque la rotation du demi-arbre **37** qui entraîne la rotation de l'arbre **39** dont l'embout **41** peut entraîner en rotation libre le plateau mené **51** centré sur le demi-arbre **47** sans interférence avec le disque menant **46**.

La rotation simultanée de l'embout **40** permet, par contre, de commander, dans le sens souhaité, le boîtier de direction **21** et d'intervenir sur le circuit de puissance **23** pour orienter par les vérins **22** les organes de direction **3**_{**1**} dans le sens souhaité.

Lorsque la structure de travail **6** est mise en service sur site ou sur chantier, l'opérateur occupe la cabine **12** et peut, dans cette situation, être amené à devoir commander le train directeur **3**_{**1**}.

Lorsque cette situation s'impose, l'alimentation de l'embrayage électromagnétique **45** est établie depuis la cabine **12** en mettant en oeuvre, à cette fin, des moyens connus non décrits en raison de leur appartenance aux connaissances de l'homme de métier. L'alimentation de l'embrayage **45** déplace le disque d'embrayage **54** qui est plaqué contre la garniture **57** pour établir une liaison angulaire entre le plateau **51** et le plateau **46**.

Si le besoin se fait sentir de commander les organes directeurs **3**_{**1**}, l'opérateur agit sur l'organe d'intervention tel que le volant **16** pour assurer, par l'intermédiaire du distributeur **25**, l'activation du circuit de pilotage **26** et, par ce dernier, l'alimentation dérivée du moteur hydraulique **30** dans le sens de rotation souhaité à partir du circuit **28**. La rotation de l'arbre **47** est alors transmise par l'embrayage **45** à l'embout d'entrée **41** de l'arbre traversant **39** dont l'embout de sortie **40** commande, comme dans la situation précédente, le boîtier de direction **21**.

Ainsi que cela ressort de ce qui précède, le groupe **35** est de nature compacte, fiable et robuste par ses composants qui peuvent être constitués sous la forme d'un sous-ensemble fonctionnel porté par la platine **42** permettant une implantation aisée sur la plate-forme **2** et un accès facile pour les interventions d'entretien.

Par ailleurs, le groupe **35** possède par sa constitution une grande fiabilité en faisant appel à des composants qui ne subissent que des contraintes pour lesquelles ils sont conçus.

En outre, la mise en oeuvre des moyens, selon l'invention, permet d'installer un seul circuit de puissance et un circuit de pilotage, comme dit ci-avant, en laissant toujours en état actif les composants du circuit de puissance. Il en résulte une réduction du coût d'installation générale, une plus grande sécurité de fonctionnement, une fiabilité accrue étant donné l'absence d'interférence fonctionnelle entre deux circuits de puissance comme dans la technique antérieure.

L'invention n'est pas limitée à l'exemple décrit et représenté car diverses modifications peuvent y être apportées sans sortir de son cadre.

## Revendications

1. Direction double poste d'un engin mobile comprenant une plate-forme (**2**) sur laquelle est adaptée une structure de travail (**6**) mobile et/ou articulée dont les organes moteurs sont alimentés à partir d'un circuit hydraulique de puissance travail (**28**), ledit engin comprenant un poste de conduite dit principal (**4**) et un poste de conduite (**12**) dit secondaire implanté sur la plate-forme, lesdits postes comprenant des volants (**5**) et (**16**) aptes à agir sélectivement pour commander des organes directeurs (**3**_{**1**}) de l'engin, ladite direction comportant un groupe de transmission et de commande à double entrée comprenant :
- un boîtier renvoi d'angle (**20**) comportant :
. un demi-arbre (**37**) formant, extérieurement au boîtier, un embout d'entrée (**38**) destiné à être lié au volant (**5**) de commande de direction du poste de conduite principal,
. une première portion d'arbre liée en rotation audit demi-arbre (**37**) et formant, extérieurement au boîtier, un embout de sortie (**40**) destiné a être lié en rotation à un organe de commande des organes directeurs (**3**_{**1**}).
. une seconde portion d'arbre formant, extérieurement au boîtier, un embout d'entrée (**41**),
- un moteur hydraulique (**30**) à double sens de rotation dont l'arbre de sortie (**47**) est disposé coaxilament à l'embout d'entrée (**41**) de la seconde portion d'arbre, ledit moteur étant alimenté à partir dit volant (**16**) de commande de direction du poste de conduite secondaire par un circuit de pilotage,
caractérisée en ce que :
- la première portion et la seconde portion d'arbre sont liées entre elles pour former un arbre traversant (**39**),
- le moteur hydraulique est alimenté par le circuit de pilotage à partir du circuit de puissance (**28**),
- et un embrayage électromagnétique (**45**) est interposé entre l'arbre de sortie (**47**) du moteur hydraulique et l'embout d'entrée (**41**) de l'arbre traversant (**39**) et se trouve mis sous alimentation électrique à partir du poste de conduite secondaire.

2. Direction selon la revendication 1, caractérisée en ce que l'embrayage (**45**) est du type à position de repos débrayée.

3. Direction selon la revendication 1 ou 2, caractérisée en ce que l'embrayage (**45**) comprend :
- un plateau menant (**46**) lié en rotation à l'arbre de sortie (**47**) du moteur hydraulique (**30**) et associé à une bobine électromagnétique annulaire (**49**) portée par une carcasse fixe (**48**) solidaire de l'embase du moteur,
- un plateau mené (**51**) lié, en rotation à l'embout d'entrée (**41**) de l'arbre traversant,
- et un disque de friction (**54**) lié en rotation au plateau mené (**51**) et interposé entre ce dernier et le plateau menant.

4. Direction selon la revendication 1, 2 ou 3, caractérisée en ce que l'embrayage comprend un plateau mené (**51**) qui est monté par un roulement de centrage (**52**) sur l'arbre de sortie (**47**) du moteur hydraulique (**30**).

5. Direction selon la revendication 1, caractérisée en ce que le boîtier (**20**) et le moteur hydraulique (**30**) sont montés sur une platine commune (**4**2).

## Claims

1. A dual-control steering system for a moving vehicle having a platform (2) on which a moving and/or swivel-mounted working structure (6) is fitted, with drive members powered from a working power hydraulic circuit (28), said vehicle having a "main" driving position (4) and a "secondary" driving position (12) installed on the platform, each of said positions having a respective steering wheel (5, 16) suitable for acting selectively to control steering members (3₁) of the vehicle, said steering system including a dual inlet steering and control unit comprising:
· an angle deflector box (20) comprising:
· a half-shaft (37) forming, outside the box, an inlet endpiece (38) for linking to the steering wheel (5) of the main driving position;
· a first shaft portion constrained to rotate with said half-shaft (37) and forming, outside the box, an outlet endpiece (40) designed to be constrained to rotate with a control member of the steering members (3₁): and
· a second shaft portion forming, outside the box, an inlet endpiece (41); and
· a both-way hydraulic motor (30) whose outlet shaft (47) is disposed on the same axis as the inlet endpiece (41) of the second shaft portion, said motor being powered under the control of the steering wheel (16) of the secondary control position via a steering circuit;
the steering system being characterized in that:
· the first and second shaft portions are interconnected to form a through shaft (39);
· the hydraulic motor is powered by the power circuit (28) via the steering circuit; and
· an electromagnetic clutch (45) is interposed between the outlet shaft (47) of the hydraulic motor and the inlet endpiece (41) of the through shaft (39) and is powered electrically from the secondary control position.

2. A steering system according to claim 1, characterized in that the clutch (45) is of the type having an unclutched rest position.

3. A steering system according to claim 1 or 2, characterized in that the clutch (45) comprises:
· a driving plate (46) constrained to rotate with the outlet shaft (47) of the hydraulic motor (30) and associated with an annular electromagnetic coil (49) carried by a fixed structure (48) secured to the base of the motor;
· a driven plate (51) constrained to rotate with the inlet endpiece (41) of the through shaft; and
· a friction disk (54) constrained to rotate with the driven plate (51) and interposed between it and the driving plate.

4. A steering system according to claim 1, 2, or 3, characterized in that the clutch has a driven plate (51) which is mounted by means of a centering ball bearing (52) on the outlet shaft (47) of the hydraulic motor (30).

5. A steering system according to claim 1, characterized in that the box (20) and the hydraulic motor (30) are mounted on a common plate (42).

## Patentansprüche

1. Fahrbares Arbeitsgerät mit zwei Lenkstellen, mit einer Plattform (2), an die ein beweglicher und/oder gelenkig angebrachter Arbeitsaufbau (6) angepaßt ist, dessen Antriebsorgane aus einem hydraulischen Unmlauf für Arbeitsleistung (28) gespeist sind, wobei das genannte Arbeitsgerät einen Lenkstand aufweist, der Hauptstand (4) genannt ist, sowie einen Lenkstand (12), der Nebenstand genannt ist und auf der Plattform angeordnet ist, wobei die Stände Lenkräder (5) und (16) aufweisen, die dazu eingerichtet sind, wahlweise wirksam zu werden, um die Lenkorgane (3₁) des Arbeitsgeräts zu steuern, und wobei die genannte Lenkung eine Getriebe- und Steuereinheit mit zwei Eingängen aufweist, mit:
- einem Winkelgetriebe (20) mit:
· einer Halbwelle (37) die außerhalb des Getriebes einen Eingangsansatz (38) bildet, der dazu bestimmt ist, mit dem richtungsgebenden Lenkrad (5) des Hauptsteuerstandes verbunden zu werden,
· einem ersten Wellenabschnitt, der drehbar mit der genannten Halbwelle (37) verbunden ist und außerhalb des Getriebes einen Ausgangsansatz (40) bildet, der dazu bestimmt ist, zur Drehung mit einem Steuerorgan der Lenkorgane (3₁) verbunden zu sein, und
· einem zweiten Wellenabschnitt, der außerhalb des Getriebes einen Eingangsabsatz (41) bildet, sowie
- einem in zwei Drehrichtungen betreibbaren Hydromotor (30), dessen Austrittswelle (47) koaxial zum Eingangsansatz (41) des zweiten Wellenabschnitts angeordnet ist, wobei der genannte Motor von einem richtungsgebenden Lenkrad (16) des Nebensteuerstandes durch einen Steuerumlauf gespeist ist,
dadurch gekennzeichnet, daß
- der erste und der zweite Wellenabschnitt miteinander ver bunden sind, um eine querlaufende Welle zu bilden (39),
- der Hydromotor vom Steuerkreis aus dem Leistungskreis (28) gespeist ist, und
- eine elektromagnetische Kupplung (45) zwischen der Austrittswelle (47) des Hydromotors und dem Eingangsansatz (41) der querverlaufenden Welle (39) eingesetzt ist und vom Nebensteuerstand her elektrisch gespeist ist.

2. Lenkung nach Anspruch 1, dadurch gekennzeichnet, daß die Kupplung dem Typ nach die Ruhelage in ausgerücktem Zustand aufweist.

3. Lenkung nach Anspruch 1 oder 2, dadurch gekennzeichnet, daß die Kupplung (45) die folgenden Merkmale aufweist:
- eine antreibende Scheibe (46), die zur Drehung mit der Austrittswelle (47) des Hydromotors (30) verbunden ist und einer elektromagnetischen Ringspule (49) zugeordnet ist, die durch einen festen Unterbau (48) getragen ist, der fest mit der Motor-Bodenplatte verbunden ist,
- eine angetriebene Scheibe (51), die zur Drehung mit dem Einlaßansatz (41) der querverlaufenden Welle verbunden ist, und
- eine Reibscheibe (54) die zur Drehung mit der angetriebenen Scheibe (51) verbunden ist und zwischen dieser und der antreibenden Scheibe angeordnet ist.

4. Lenkung nach Anspruch 1, 2 oder 3, dadurch gekennzeichnet, daß die Kupplung eine angetriebene Scheibe (51) aufweist, die durch ein zentrierendes Wälzlager (52) auf der Austrittswelle (47) des Hydromotors (30) angebracht ist.

5. Lenkung nach Anspruch 1, dadurch gekennzeichnet, daß das Getriebe (20) und der Hydromotor (30) auf einer gemeinsamen Platte (42) montiert sind.
